# EUROPÄISCHE PATENTSCHRIFT

(11) **EP 2 053 951 B1**
(45) Veröffentlichungstag und Bekanntmachung des Hinweises auf die Patenterteilung: **08.12.2010**
(21) Anmeldenummer: 07765173.5
(22) Anmeldetag: 11.07.2007
(51) Int. Cl.: A47J 31/54, F22B 27/08, F22B 1/28

(54) **HEISSWASSERBEREITER, BESONDERS FÜR EINE KAFFEEMASCHINE**
BOILER, IN PARTICULAR FOR A COFFEE MACHINE
CHAUFFE-EAU, EN PARTICULIER POUR UNE MACHINE À CAFÉ

(30) Priorität: 25.08.2006 DE 102006040330
(43) Veröffentlichungstag der Anmeldung: 06.05.2009
(73) Patentinhaber: Tchibo GmbH, 22297 Hamburg (DE)
(72) Erfinder: BALKAU, Werner, 8762 Schwändi (CH); TERNITÉ, Rüdiger, 21149 Hamburg (DE); MEYER-RUHSTRAT, Hartwig, 21435 Stelle (DE)
(74) Vertreter: UEXKÜLL & STOLBERG
(86) Internationale Anmeldenummer: PCT/EP2007/006155
(87) Internationale Veröffentlichungsnummer: WO 2008/022669

(56) Entgegenhaltungen:
- DE-C- 463 730
- DE-C- 574 301
- DE-U- 1 975 794

## Beschreibung

Die Erfindung betrifft einen Boiler, insbesondere für eine Kaffeemaschine, mit dem auch Dampf erzeugt werden kann.

Ein herkömmlicher Boiler in einer Kaffeemaschine enthält ein als Druckgefäß ausgelegtes Gehäuse, einen Kaltwassereinlass, einen Heißwasserauslass, eine elektrische Heizung und einen Dampfauslass. Zur Zubereitung von Kaffee wird kaltes Wasser über den Kaltwassereinlass in das Druckgefäß gepumpt und von der Heizung auf eine Temperatur von ca. 90 °C bis 105 °C erhitzt. Das im Boiler befindliche heiße Wasser wird durch das zuströmende kalte Wasser verdrängt und verlässt den Boiler über den Heißwasserauslass. Von dort gelangt es z.E. über ein Ventil in eine Brühwasserleitung und anschließend in eine Brühkammer, die gemahlenen Kaffee enthält.

Zum Erzeugen von Dampf kann man den vorbekannten Boiler auf eine höhere Temperatur von z.B. 105 °C bis 115 °C aufheizen. Über eine Öffnung an der Oberseite des Boilers lässt sich anschließend Dampf entnehmen, der sich im oberen Bereich des Boilers sammelt.

Die vorbekannten Boilersysteme haben den Nachteil, dass der entnommene Dampf relativ viel flüssiges Wasser enthält und man nach dem Öffnen der Dampfauslassöffnung bzw. eines zugeordneten Ventils relativ lange warten muss, bis der Anteil an flüssigem Wasser im Dampf absinkt. Außerdem muss man zunächst abwarten, bis der gesamte Wasserinhalt in dem Boiler auf die erhöhte Temperatur aufgeheizt ist.

Ein Boiler gemäß dem Oberbegriff des Anspruchs 1 ist aus DE 574 301 C bekannt. Dabei sind ein Wasser- und ein Dampfraum durch eine Anzahl von zwischen zwei Seitenteilen befestigten Rohren ausgebildet, wobei sich zur Verbindung der einzelnen Rohre dienende Rohrkrümmer als ausgearbeitete Kanäle in den Seitenteilen befinden.

In DE 463 730 C ist ein elektrischer Heißwasser- und Dampferzeuger beschrieben, in dessen oberem Bereich ein Dampfraum angeordnet ist. Es sind zwei Auslässe zur Dampfentnahme vorgesehen, von denen sich einer oberhalb und einer unterhalb des Dampfraums befindet.

DE 1 975 794 U zeigt einen elektrischen Durchlauferhitzer mit einem das Wasser führenden gewendelten Rohr, auf dessen Außenwandung elektrische Heizkörper aufgelötet oder aufgeschweißt sind.

Es ist Aufgabe der Erfindung, einen Boiler, insbesondere für eine Kaffeemaschine, zu schaffen, mit dem außer dem üblichen Heißwasser auch möglichst schnell möglichst trockener Dampf (also Dampf mit einem möglichst geringen Anteil an flüssigem Wasser) bereitgestellt werden kann.

Diese Aufgabe wird gelöst durch eine Boiler mit den Merkmalen des Anspruchs 1. Vorteilhafte Ausgestaltungen der Erfindung ergeben sich aus den Unteransprüchen. Die Ansprüche 8 und 9 betreffen ein Verfahren zum Erzeugen von Dampf mit einem derartigen Boiler.

Der erfindungsgemäße Boiler eignet sich insbesondere für eine Kaffeemaschine, ist aber nicht ausschließlich für die Verwendung mit Kaffeemaschinen konzipiert. Der Boiler hat ein Gehäuse, das zur Aufnahme von Wasser geeignet ist und vorzugsweise als Druckgefäß konstruiert ist, einen Kaltwassereinlass, einen Heißwasserauslass, eine elektrische Heizung und einen Dampfauslass. In thermischem Kontakt mit der Heizung angeordnet ist eine Dampferzeugungsleitung (die z.B. ein Metallrohr aufweist) mit einer Wassereinlassöffnung und einer Dampfauslassöffnung. Die Dampfauslassöffnung steht mit dem Dampfauslass in Verbindung oder ist damit identisch. Vorzugsweise ist an dem Dampfauslass ein Ventil angeordnet.

Wasser, das in die Dampferzeugungsleitung eintritt, wird wegen des thermischen Kontakts der Dampferzeugungsleitung mit der Heizung und da es sich dabei, verglichen mit dem gesamten Boilerinhalt, um eine relativ geringe Wassermenge handelt, sehr schnell auf eine hohe Temperatur aufgeheizt. Wenn der Dampfauslass geöffnet wird, z.B. über das erwähnte Ventil, herrscht im Bereich des Dampfauslasses des Boilers und der Dampfauslassöffnung der Dampferzeugungsleitung wegen der einsetzenden Strömungsverhältnisse ein niedrigerer Druck als im übrigen Boiler, so dass aus dem sehr heißen Wasser in der Dampferzeugungsleitung Dampf entsteht und über den Dampfauslass entweicht. Je nach dem Druck innerhalb des Boilers und der Temperatur der Dampferzeugungsleitung ist es auch möglich, dass bereits bei geschlossenem Ventil Dampf in der Dampferzeugungsleitung gebildet wird. Der austretende Dampf enthält kein flüssiges Wasser oder nur einen relativ geringen Anteil an flüssigem Wasser.

Die Erfindung schafft somit eine technisch einfache, sehr effiziente und kostengünstige Möglichkeit, mit einem Boiler sehr schnell im Wesentlichen trockenen Dampf zu erzeugen.

Die Wassereinlassöffnung der Dampferzeugungsleitung befindet sich im Innenraum des Gehäuses. Daher ist kein zusätzlicher Wasseranschluss für die Dampferzeugungsleitung erforderlich. Ohnehin im Boiler befindliches Wasser wird bei der Entnahme von Dampf infolge der erläuterten Strömungsverhältnisse automatisch in die Dampferzeugungsleitung eingesaugt und steht damit für die Dampferzeugung zur Verfügung.

Die Dampfauslassöffnung der Dampferzeugungsleitung ist vorzugsweise oberhalb von deren Wassereinlassöffnung angeordnet. Da der Dampf spezifisch leichter ist als flüssiges Wasser, erleichtert dies die Dampfbildung und -entnahme.

Bei vorteilhaften Ausführungsformen der Erfindung ist die gesamte Dampferzeugungsleitung im Innenraum des Gehäuses angeordnet, oder Teile der Dampferzeugungsleitung ragen durch die Gehäusewandung, z.B. als Ansatzstutzen für den Dampfauslass. Die Dampfauslassöffnung der Dampferzeugungsleitung kann auch über eine Verbindungsleitung mit dem Dampfauslass des Boilers verbunden sein.

Bei einer bevorzugten Ausführungsform ist die Heizung wendelartig geformt und im Innenraum des Boilers angeordnet. Dabei folgt die Dampferzeugungsleitung vorzugsweise zumindest in einem Teilabschnitt den Wendelgängen der Heizung oder zumindest einem Teil der Wendelgänge. Vorzugsweise weist die Heizung ein Metallrohr auf (in dessen Innenraum z.B. ein elektrischer Heizwiderstandsdraht angeordnet ist), und die Dampferzeugungsleitung weist ebenfalls ein Metallrohr auf, wobei die Metallrohre der Heizung und der Dampferzeugungsleitung vcrzugsweise miteinander verlötet sind. Eine derartige Konstruktion schafft einen guten thermischen Kontakt, ist solide und lässt sich relativ leicht herstellen.

Wie mit einem erfindungsgemäßen Boiler, bei dem die Wassereinlassöffnung der Dampferzeugungsleitung im Innenraum des Gehäuses angeordnet ist, Dampf erzeugt werden kann, wurde bereits kurz erläutert. Hier nochmals die Schritte: Über den Kaltwassereinlass wird Wasser in den Innenraum des Gehäuses zugeführt. Dabei kommt vorzugsweise eine externe Pumpe zum Einsatz. Beim Betreiben der Heizung und nach dem Öffnen eines dem Dampfauslass zugeordneten Ventils entweicht in die Dampferzeugungsleitung eintretendes Wasser über den Dampfauslass als Dampf. Die Heizung wird mit einer solchen Temperatur betrieben, dass die Dampferzeugungsleitung eine Temperatur von mehr als 100 °C annimmt, z.B. eine Temperatur im Bereich von 105 °C bis 115 °C oder auch eine höhere Temperatur. Die optimale Temperatur hängt von den Details der Konstruktion ab, z.B. von dem thermischen Kontakt zwischen der Dampferzeugungsleitung und der Heizung, vom Strömungswiderstand der Dampferzeugungsleitung und anderer Leitungen im System, von der Pumpenleistung, usw., lässt sich aber bei einer gegebenen Konstruktion leicht durch Versuche ermitteln.

Im Folgenden wird die Erfindung anhand eines Ausführungsbeispiels weiter beschrieben. Die Zeichnungen zeigen in
- Figur 1: eine dreidimensionale Außenansicht einer Ausführungs- form des erfindungsgemäßen Boilers,
- Figur 2: eine Draufsicht auf den Boiler gemäß Figur 1,
- Figur 3: eine schematische Schnittansicht in der Ebene III-III gemäß Figur 2, wobei auch Teile hinter dieser Ebene dargestellt sind,
- Figur 4: eine schematische Schnittansicht in der Ebene IV-IV ge- mäß Figur 2, wobei auch Teile hinter dieser Ebene dar- gestellt sind, und
- Figur 5: eine in Figur 4 mit V gekennzeichnete Detailvergröße- rung aus Figur 4.

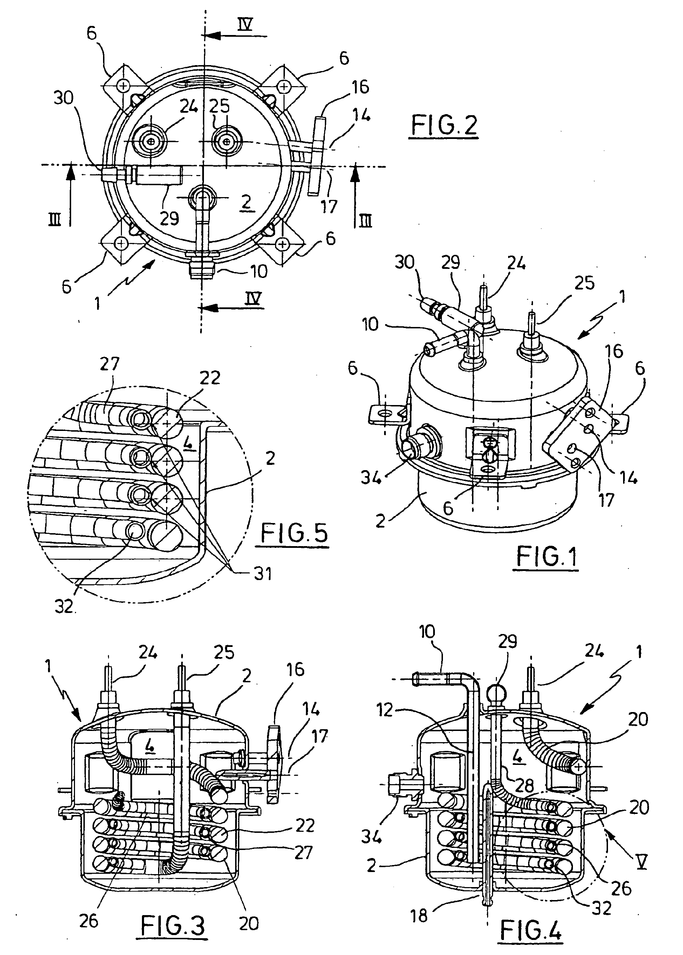

In Figur 1 ist eine Ausführungsform eines zur Verwendung in einer Kaffeemaschine konzipierten Boilers 1 in dreidimensionaler Ansicht dargestellt. Die Figuren 2 bis 5 zeigen dieselbe Ausführungsform.

Der Boiler 1 weist ein als Druckgefäß gestaltetes Gehäuse 2 mit einem Innenraum 4 auf, in dem sich beim Betrieb des Boilers 1 Wasser befindet. Zur Montage in einer Kaffeemaschine dienen Befestigungswinkel 6.

An der Oberseite des Boilers 1 befindet sich ein Kaltwassereinlass 10, der über ein Rohrstück 12 in den unteren Bereich des Innenraums 4 führt. Ein Heißwasserauslass 14 reicht von der Wandung des Gehäuses 2 über einen Rohrstutzen bis zu einem Flansch 16. Wenn der Boiler 1 in eine Kaffeemaschine eingebaut ist, wird der Heißwasserauslass 14 über ein in den Figuren nicht eingezeichnetes Verbindungsstück, das an dem Flansch 16 befestigt ist, über eine weitere Flanschöffnung 17 zu einer Brühwasserleitung 18 geführt. Die Brühwasserleitung 18 erstreckt sich im Innenraum 4 des Boilers 1 und durch die Unterseite des Gehäuses 2, siehe Figur 4 (in der nur ein Teil der Brühwasserleitung 18 ohne den Anschluss an die Flanschöffnung 17 eingezeichnet ist).

Im Innenraum 4 des Boilers 1 ist ferner eine elektrische Heizung 20 angeordnet. Die Heizung 20 weist ein wendelartig geformtes Metallrohr 22 auf, dessen Wendelgänge sich im unteren Bereich des Innenraums 4 befinden. Die beiden Enden dieses Metallrohrs 22 sind als Anschlüsse 24 und 25 durch die Oberseite des Gehäuses 2 geführt. Im Inneren des Metallrohrs 22 befindet sich ein elektrisch isolierter Heizwiderstand.

Mit den Wendelgängen der Heizung 20 steht eine Dampferzeugungsleitung 26 in thermischem Kontakt. Die Dampferzeugungsleitung 26 weist ein Metallrohr mit Wendelgängen 27 auf, die den Wendelgängen der Heizung 20 folgen und in ein Verbindungsstück 28 übergehen, das durch die Oberseite des Gehäuses 2 geführt ist. Über einen Krümmer 29 endet die Dampferzeugungsleitung 26 an einer Dampfauslassöffnung 30, die als Dampfauslass des Boilers 1 dient. Im Ausführungsbeispiel sind die oberen Wendelgänge 27 mit den oberen Wendelgängen der Heizung 20 fortlaufend verlötet, siehe die Lötstellen 31 in Figur 5.

An ihrem unteren Ende steht die Dampferzeugungsleitung 26 offen, so dass dort eine Wassereinlassöffnung 32 ausgebildet ist, siehe Figur 5.

An der Seitenwandung des Gehäuses 2 befindet sich eine Durchführung 34 für einen Temperatursensor. Mit Hilfe der von dem Temperatursensor gemessenen Temperatur in dem Boiler 1 kann die Steuerung der Kaffeemaschine die Heizleistung regeln.

Ventile zum Öffnen und Schließen der beschriebenen Anschlüsse des Boilers 1 sind in den Figuren nicht eingezeichnet. Derartige Ventile werden von der Kaffeemaschine gesteuert oder sind als handbetätigte Ventile ausgeführt. Sie könne unmittelbar an dem Boiler 1 angeordnet und auch Komponenten des Boilers 1 sein, können aber auch über einen Leitungsabschnitt mit dem jeweiligen Anschluss in Verbindung stehen bzw. dem jeweiligen Anschluss zugeordnet sein.

Um mit dem Boiler 1 Heißwasser zum Brühen von Kaffee zuzubereiten, wird Wasser mittels einer Pumpe über den Kaltwassereinlass 10 in den Innenraum 4 geführt und von der Heizung 20 erwärmt, vorzugsweise auf eine Temperatur von 90 °C bis 105 °C. Das Heißwasser verlässt den Boiler 1, wie erläutert, über den Heißwasserauslass 14, die Flanschöffnung 17 und die Brühwasserleitung 18. Von dort gelangt das Heißwasser zu einer Brühkammer der Kaffeemaschine. Wenn die Wassertemperatur auf Werte von mehr als 100 °C eingestellt ist, entspannt sich das Heißwasser beim Austreten aus dem Boiler 1 auf Atmosphärendruck und kühlt dabei zwar etwas ab, hat aber immer noch eine hohe Temperatur. Dies ist vorteilhaft, damit bereits für die erste Tasse Kaffee ausreichend heißes Brühwasser zur Verfügung steht.

Um Dampf zu erzeugen, kann die Heizung 20 auf eine höhere Temperatur erhitzt werden als im normalen Betrieb der Kaffeemaschine zur Kaffeezubereitung. Es ist aber auch denkbar, dass bereits im normalen Betrieb der Kaffeemaschine die Temperatur der Heizung selbst für die im folgende erläuterte Dampferzeugung ausreicht. Im Inneren der Dampferzeugungsleitung 26 befindet sich Wasser, das durch den engen thermischen Kontakt mit der Heizung 20 besonders heiß wird und bei dem gegebenen Druck in dem Boiler 1 bereits verdampfen kann. Spätestens, wenn das dem Dampfauslass 30 zugeordnete Ventil geöffnet wird und Kaltwasser unter der Wirkung der Förderpumpe der Kaffeemaschine über den Kaltwassereinlass 10 in den Boiler 1 nachströmen kann, entsteht in der Dampferzeugungsleitung 26 bei den sich einstellenden dynamischen Druckverhältnissen Dampf, der dem Benutzer z.B. zur Zubereitung einer Schaumkrone auf einem Kaffeegetränk zur Verfügung steht. Wasser wird über die Wassereinlassöffnung 32 in die Dampferzeugungsleitung 26 nachgesaugt. Während der Dampfentnahme sollte die Heizung 20 eingeschaltet sein.

Da die Wärmekapazität des in der Dampferzeugungsleitung 26 befindlichen Wassers gering ist, kann der Boiler 1 den gewünschten Wasserdampf sehr schnell bereitstellen. Außerdem enthält dieser Dampf nur geringe Anteile an flüssigem Wasser.

Die Steuerung der Heizung 20, der Pumpe der Kaffeemaschine sowie der den Anschlüssen des Boilers 1 zugeordneten Ventile erfolgt über die Kaffeemaschine in einer dem Fachmann geläufigen Weise. Zur Dampferzeugung wird vorzugsweise beim Öffnen des dem Dampfauslass 30 zugeordneten Ventils die Heizung eingeschaltet und gegebenenfalls bei erhöhter Temperatur betrieben.

Man kann den Dampfauslass 30 aber auch zur Entnahme von heißem Wasser nutzen, z.B. zur Zubereitung von Tee. In diesem Fall wird unter der Steuerung der Kaffeemaschine die Heizung beim Öffnen des dem Dampfauslass 30 zugeordneten Ventils abgeschaltet (oder nicht eingeschaltet), so dass über dieses Ventil Heißwasser mit der in dem Boiler 1 herrschenden Temperatur austreten kann.

## Patentansprüche

1. Boiler, insbesondere für eine Kaffeemaschine, mit einem Gehäuse (2), einem Kaltwassereinlass (10), einem Heißwasserauslass (14), einer elektrischen Heizung (20) und einem Dampfauslass (30), wobei der Boiler eine in thermischem Kontakt mit der Heizung (20) angeordnete Dampferzeugungsleitung (26) mit einer Wassereinlassöffnung (32) und einer Dampfauslassöffnung (30) aufweist und wobei die Dampfauslassöffnung (30) mit dem Dampfauslass (30) in Verbindung steht oder damit identisch ist, **dadurch gekennzeichnet, dass** sich die Wassereinlassöffnung (32) der Dampferzeugungsleitung (26) im Innenraum (4) des Gehäuses (2) befindet.

2. Boiler nach Anspruch 1, **dadurch gekennzeichnet, dass** die Dampfauslassöffnung (30) der Dampferzeugungsleitung (26) oberhalb von deren Wassereinlassöffnung (32) angeordnet ist.

3. Boiler nach Anspruch 1 oder 2, **dadurch gekennzeichnet, dass** die Dampfauslassöffnung der Dampferzeugungsleitung über eine Verbindungsleitung mit dem Dampfauslass verbunden ist.

4. Boiler nach einem der Ansprüche 1 bis 3, **dadurch gekennzeichnet, dass** die Heizung (20) wendelartig geformt und im Innenraum (4) des Boilers (1) angeordnet ist.

5. Boiler nach Anspruch 4, **dadurch gekennzeichnet, dass** die Dampferzeugungsleitung (26, 27) zumindest in einem Teilabschnitt den Wendelgängen (22) oder einem Teil der Wendelgänge (22) der Heizung (20) folgt.

6. Boiler nach Anspruch 5, **dadurch gekennzeichnet, dass** die Heizung (20) ein Metallrohr (22) aufweist und dass die Dampferzeugungsleitung (26) ein Metallrohr (27, 28) aufweist, wobei vorzugsweise die Metallrohre der Heizung (20) und der Dampferzeugungsleitung (26) miteinander verlötet sind.

7. Boiler nach einem der Ansprüche 1 bis 6, **dadurch gekennzeichnet, dass** am Dampfaüslass (30) ein Ventil angeordnet ist.

8. Verfahren zum Erzeugen von Dampf mit einem Boiler (1) nach Anspruch 1, **gekennzeichnet durch** die Schritte:
- Zuführen von Wasser über den Kaltwassereinlass (10) in den Innenraum (4) des Gehäuses (2), vorzugsweise mittels einer externen Pumpe,
- Betreiben der Heizung (20), so dass die Dampferzeugungsleitung (26) eine Temperatur von mehr als 100°C erreicht, vorzugsweise eine Temperatur im Bereich von 105°C bis 115°C oder eine Temperatur von mehr als 115°C,
- Entnehmen von Dampf über ein dem Dampfauslass (30) zugeordnetes Ventil.

9. Verfahren nach Anspruch 8, **dadurch gekennzeichnet, dass** der Boiler (1) zusätzlich die Merkmale gemäß einem der Ansprüche 2 bis 7 aufweist.

## Claims

1. Boiler, in particular for a coffee machine, comprising a housing (2), a cold-water inlet (10), a hot-water outlet (14), an electric heater (20) and a steam outlet (30), the boiler having a steam generation line (26) which comprises a water inlet opening (32) and a steam outlet opening (30) and is arranged in thermal contact with the heater (20) and the steam outlet opening (30) being connected to the steam outlet (30) or being identical therewith, **characterised in that** the water inlet opening (32) of the steam generation line (26) is located in the interior (4) of the housing (2).

2. Boiler according to claim 1, **characterised in that** the steam outlet opening (30) of the steam generation line (26) is arranged above the water inlet opening (32) thereof.

3. Boiler according to either claim 1 or claim 2, **characterised in that** the steam outlet opening of the steam generation line is connected to the steam outlet via a connection line.

4. Boiler according to any one of claims 1 to 3, **characterised** the heater (20) is in the form of a helix and is arranged in the interior (4) of the boiler (1).

5. Boiler according to claim 4, **characterised in that** the steam generation line (26, 27) follows the heater (20) at least in a subportion of the helical turns (22) or a part of the helical turns (22) of the heater (20).

6. Boiler according to claim 5, **characterised in that** the heater (20) has a metal tube (22) and **in that** the steam generation line (26) has a metal tube (27, 28), the metal tubes of the heater (20) and the steam generation line (26) preferably being soldered to one another.

7. Boiler according to any one of claims 1 to 6, **characterised in that** a valve is arranged at the steam outlet (30).

8. Method for generating steam using a boiler (1) according to claim 1, **characterised by** the steps of:
- supplying water into the interior (4) of the housing (2) via the cold-water inlet (10), preferably by means of an external pump,
- operating the heater (20) in such a way that the steam generation line (26) reaches a temperature of more than 100 °C, preferably a temperature in the range of from 105 °C to 115 °C or a temperature of more than 115 °C,
- removing steam via a valve associated with the steam outlet (30).

9. Method according to claim 8, **characterised in that** the boiler (1) additionally has the features according to any one of claims 2 to 7.

## Revendications

1. Chauffe-eau, en particulier pour une machine à café, comprenant un boîtier (2), une entrée d'eau froide (10), une sortie d'eau chaude (14), un chauffage électrique (20) et une sortie de vapeur (30), dans lequel le chauffe-eau présente un conduit de production de vapeur (26) agencé en contact thermique avec le chauffage (20) et avec une ouverture d'entrée d'eau (32) et une ouverture de sortie de vapeur (30) et dans lequel l'ouverture de sortie de vapeur (30) est en communication avec la sortie de vapeur (30) ou est identique à celle-ci, **caractérisé en ce que** l'ouverture d'entrée d'eau (32) du conduit de production de vapeur (26) se trouve dans l'espace interne (4) du boîtier (2).

2. Chauffe-eau selon la revendication 1, **caractérisé en ce que** l'ouverture de sortie de vapeur (30) du conduit de production de vapeur (26) est agencée au-dessus de son ouverture d'entrée d'eau (32).

3. Chauffe-eau selon la revendication 1 ou 2, **caractérisé en ce que** l'ouverture de sortie de vapeur du conduit de production de vapeur est raccordée à la sortie de vapeur via un conduit de raccordement.

4. Chauffe-eau selon l'une quelconque des revendications 1 à 3, **caractérisé en ce que** le chauffage (20) est conformé en hélice et agencé dans l'espace interne (4) du chauffe-eau (1).

5. Chauffe-eau selon la revendication 4, **caractérisé en ce que** le conduit de production de vapeur (26, 27) suit au moins dans un segment partiel les spires d'hélice (22) ou une partie des spires d'hélice (22) du chauffage (20).

6. Chauffe-eau selon la revendication 5, **caractérisé en ce que** le chauffage (20) présente un tuyau métallique (22) et **en ce que** le conduit de production de vapeur (26) présente un tuyau métallique (27, 28), dans lequel les tuyaux métalliques du chauffage (20) et du conduit de production de vapeur (26) sont de préférence brasés l'un à l'autre.

7. Chauffe-eau selon l'une quelconque des revendications 1 à 6, **caractérisé en ce qu'**une soupape est agencée sur la sortie de vapeur (30).

8. Procédé pour produire de la vapeur avec un chauffe-eau (1) selon la revendication 1, **caractérisé par** les étapes suivantes :
- acheminement d'eau par l'entrée d'eau froide (10) dans l'espace interne (4) du boîtier (2), de préférence au moyen d'une pompe externe,
- actionnement du chauffage (20) de sorte que le conduit de production de vapeur (26) atteigne une température supérieure à 100 °C, de préférence une température dans la plage de 105 °C à 115 °C ou une température supérieure à 115 °C,
- prélèvement de vapeur via une soupape affectée à la sortie de vapeur (30).

9. Procédé selon la revendication 8, **caractérisé en ce que** le chauffe-eau (1) présente en outre les caractéristiques selon l'une quelconque des revendications 2 à 7.
